# EUROPÄISCHE PATENTSCHRIFT

(11) **EP 1 910 142 B1**
(45) Veröffentlichungstag und Bekanntmachung des Hinweises auf die Patenterteilung: **18.04.2012**
(21) Anmeldenummer: 06764240.5
(22) Anmeldetag: 21.07.2006
(51) Int. Cl.: B60T 13/569, F16J 3/02

(54) **PNEUMATISCHER BREMSKRAFTVERSTÄRKER UND MEMBRAN DAFÜR**
PNEUMATIC SERVOBRAKE AND DIAPHRAGM THEREFOR
SERVOFREIN PNEUMATIQUE ET MEMBRANE DESTINEE A CE SERVOFREIN

(30) Priorität: 22.07.2005 DE 102005034959; 21.12.2005 DE 102005061353
(43) Veröffentlichungstag der Anmeldung: 16.04.2008
(73) Patentinhaber: Continental Teves AG & Co. oHG, 60488 Frankfurt (DE)
(72) Erfinder: FALLER, Jürgen, 63796 Kahl (DE); JAKOBI, Ralf, 65439 Flörsheim (DE)
(86) Internationale Anmeldenummer: PCT/EP2006/064500
(87) Internationale Veröffentlichungsnummer: WO 2007/010031

(56) Entgegenhaltungen:
- EP-A1- 1 346 894
- DE-A1- 4 124 683
- GB-A- 2 188 700
- GB-A- 2 328 991
- US-A- 4 587 889
- US-A- 5 207 142
- US-A- 5 235 897
- US-A1- 2005 092 170

## Beschreibung

Die Erfindung betrifft einen pneumatischer Bremskraftverstärker mit einem Verstärkergehäuse, welches eine erste und eine zweite Gehäusehalbschale umfasst und welches durch eine, mit einem pneumatischen Differenzdruck beaufschlagbare, axial bewegliche Wand in eine Arbeitskammer und eine Unterdruckkammer unterteilt ist, wobei die bewegliche Wand durch einen Membranteller und eine daran anliegende Membran gebildet ist, die einen radial innenliegenden Dichtwulst sowie einen radial außenliegenden Dichtwulst zur Abdichtung der beiden Kammern aufweist, wobei der radial außenliegende Dichtwulst zwischen radialen Flanschen und einem axialen Flansch der Gehäusehalbschalen einspannbar ist.

Ein derartiger pneumatischer Bremskraftverstärker ist beispielsweise aus der DE 41 24 683 A1 bekannt. Der radial außenliegende Dichtwulst des bekannten Bremskraftverstärkers ist zwischen zwei im Wesentlichen radial ausgebildeten Flanschen der Gehäusehalbschalen eingespannt, wobei an dem radialen Flansch der zweiten Gehäusehalbschale ein axial ausgebildeter Flansch angeformt ist, der nach Zusammenfügen der beiden Gehäusehalbschalen den radialen Flansch der ersten Gehäusehalbschale überragt. Die kraftschlüssige Verbindung der Gehäusehalbschalen erfolgt beispielsweise durch Lancieren des axialen Flansches, in einem Bereich, welcher den radialen Flansch der ersten Gehäusehalbschale überragt. Dabei wird der radial außenliegende Dichtwulst beim Fügen der Gehäusehalbschalen derart verformt, dass dabei überschüssiges Dichtwulstvolumen aus einem Einbauraum zwischen den Flanschen in einen Innenraum des Bremskraftverstärkers gedrängt wird. Untersuchungen haben gezeigt, dass das Herausdrängen des überschüssigen Dichtwulstvolumens zu einer verschlechterten Montage der Membran führt, wobei die Abdichtung der beiden Kammern durch die Membran nicht mehr gewährleistet ist. Diese Undichtigkeit führt damit zwangsläufig zu einem Ausfall des Bremskraftverstärkers. Als verbesserungswürdig wird bei bekannten Bremskraftverstärkern daher die Einspannung der Membran zwischen den Gehäusehalbschalen angesehen.

Ferner ist aus US 2005/092170 A1 ein Tandem-Bremskraftverstärker bekannt, bei welchem eine Luftführung zwischen den beiden Arbeitskammern über Durchgänge in einem Dichtwulst sowie einer Zwischenwand erfolgt.

Aufgabe der Erfindung ist es demgemäß, einen gattungsgemäßen Bremskraftverstärker mit einer verbesserten Membraneinspannung bereitzustellen.

Erfindungsgemäß wird die Aufgabe dadurch gelöst, dass der radial außenliegende Dichtwulst eine umlaufende, gleichmäßige Rippenstruktur mit Rippen und Rippenzwischenräumen aufweist, wobei die zweite Gehäusehalbschale eine axial ausgerichtete Führungsfläche zur gezielten Führung des Dichtwulstes bei der Montage aufweist und wobei beim Zusammenfügen der Gehäusehalbschalen die Luft in den Rippenzwischenräumen gezielt aus einem Einbauraum des Dichtwulstes herausgeführt wird, wodurch kein Luftpolster entstehen kann.
Die Rippenstruktur gewährleistet einerseits die Stabilität und ermöglicht andererseits eine Werkstoffreduzierung des Dichtwulstes, so dass die Membran ohne überschüssiges Dichtwulstvolumen zwischen den Gehäusehalbschalen eingespannt werden kann. Daher kann gezielt ein innerer Druck in dem Dichtwulst aufgebaut werden, der den Sitz der Dichtwulst in dem dafür vorgesehenen Einbauraum zwischen den Gehäusehalbschalen sicherstellt. Gleichzeitig ist die Abdichtung durch die Membran weiterhin gewährleistet. Ein weiterer Vorteil ergibt sich dadurch, dass lediglich der Dichtwulst der Membran umgestaltet werden muss, die restlichen Bauteile des Bremskraftverstärkers jedoch weitgehend gleich bleiben können.

In vorteilhafter Ausgestaltung der Erfindung ist die Rippenstruktur mit Rippen und Rippenzwischenräumen auf einer radialen Innenseite des Dichtwulstes vorgesehen.
Dabei erstrecken sich die Rippenzwischenräume lediglich teilweise über die radiale Innenseite sowie lediglich teilweise über eine axiale Seite des Dichtwulstes, welche an einem radialen Flansch der zweiten Gehäusehalbschale anliegt, wodurch die Schwächung des Dichtwulstes durch die Rippenzwischenräume möglichst gering gehalten werden kann.

Vorzugsweise sind die Gehäusehalbschalen mittels einer Steglancierung miteinander kraftschlüssig verbunden, wobei an dem radialen Flansch der zweiten Gehäusehalbschale ein axialer ausgebildeter Flansch angeformt ist, welcher radial ausgerichtete Spalte aufweist, die sich nach der Verbindung der Gehäusehalbschalen mit dem Einbauraum des Dichtwulstes geringfügig überdecken. Dadurch kann sich der Dichtwulst minimal nach radial außen verformen und es wird so zusätzlich ein Herausdrängen von überschüssigem Dichtwulstvolumen in den Innenraum verhindert.

Eine einfache Montage des Dichtwulstes wird dadurch erreicht, dass eine radiale Außenseite des Dichtwulstes eine Einführschräge aufweist und die radiale Innenseite konisch vorgesehen ist.

Eine vorteilhafte Ausgestaltung der Erfindung sieht vor, dass die Rippenstruktur mit Rippen und Rippenzwischenräumen auf einer radialen Innenseite des Dichtwulstes sowie auf einer radialen Außenseite vorgesehen ist, wodurch sich eine gleichmäßige Verformung des Dichtwulstes ergibt.
Die Rippen können dabei auf der radialen Innenseite und der radialen Außenseite zueinander versetzt oder gemäß einer weiteren vorteilhaften Ausführungsform zueinander gegenüberliegend angeordnet sein. Die zuletzt genannte Ausführungsform hat den besonderen Vorteil, dass der Dichtwulst trotz Rippen auf beiden Seiten relativ stabil ausgebildet ist und eine sehr gleichmäßige Verformung des Dichtwulstes erzielt wird.

Zur erleichterten Montage der Membran können die Rippen vorzugsweise Einführschrägen aufweisen oder die radiale Innenseite sowie die radiale Außenseite des Dichtwulstes sind konisch ausgestaltet vorgesehen.

Vorzugsweise weist die zweite Gehäusehalbschale eine axial ausgerichtete Führungsfläche zur Führung des Dichtwulstes auf, wodurch der Dichtwulst bei der Montage gezielt geführt und eine Verkantung des Dichtwulstes verhindert werden kann.

Ferner stellt die Erfindung eine Membran für einen pneumatischen Bremskraftverstärker bereit, welche dadurch gekennzeichnet ist, dass die Membran einen Dichtwulst der zuvor dargestellten Art aufweist, derart, dass beim Zusammenfügen der Gehäusehalbschalen die Luft in den Rippenzwischenräumen gezielt aus einem Einbauraum des Dichtwulstes herausgeführt wird, wodurch kein Luftpolster entstehen kann.

Nachstehend wird die Erfindung anhand der Zeichnung erläutert, welche Ausführungsbeispiele zeigt. Es zeigt jeweils stark schematisiert sowie im Schnitt:
- Figur 1: eine Teilansicht eines bekannten pneumatischen Bremskraftverstärkers im Längsschnitt;
- Figur 2a: einen Ausschnitt eines ersten Ausführungsbeispiels eines erfindungsgemäßen pneumatischen Bremskraftverstärkers im Längsschnitt vor dem kraftschlüssigen Verbinden der zwei Gehäusehalbschalen des Verstärkergehäuses;
- Figur 2b: der Ausschnitt gemäß Fig. 2a nach dem kraftschlüssigen Verbinden der Gehäusehalbschalen;
- Figur 2c: einen Ausschnitt einer Membran des ersten Ausführungsbeispiels gemäß Fig. 2a und 2b in räumlicher Ansicht;
- Figur 3: einen Ausschnitt einer Membran eines zweiten Ausführungsbeispiels in räumlicher Ansicht;
- Figur 4a: einen Ausschnitt einer Membran eines dritten Ausführungsbeispiels im Längsschnitt und
- Figur 4b: der Ausschnitt der Membran gemäß Fig. 4a vor dem kraftschlüssigen Verbinden der Gehäusehalbschalen in räumlicher Ansicht.

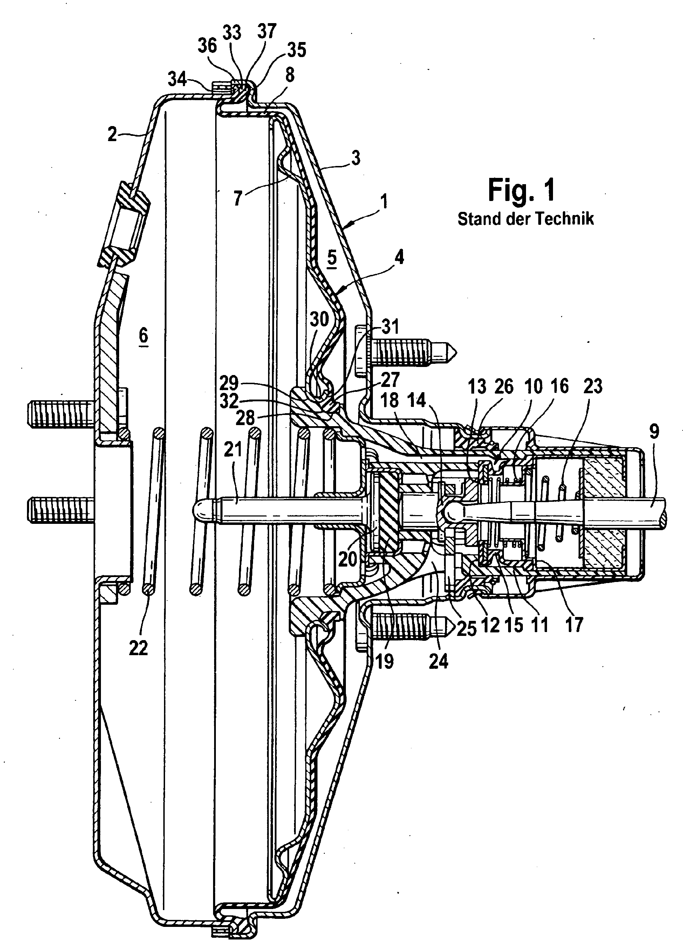

Das lediglich schematisch angedeutete Verstärkergehäuse 1 eines in Fig. 1 gezeigten bekannten pneumatischen Bremskraftverstärkers einer Kraftfahrzeugbremsanlage umfasst eine erste Gehäusehalbschale 2 und eine zweite Gehäusehalbschale 3, die mit Hilfe von umformtechnischen Maßnahmen wie beispielsweise Lancieren kraftschlüssig miteinander verpresst sind. Das Verstärkergehäuse 1 ist durch eine axial bewegliche Wand 4 in eine Arbeitskammer 5 und eine Unterdruckkammer 6 unterteilt. Die axial bewegliche Wand 4 besteht aus einem, beispielsweise aus Blech tiefgezogenen Membranteller 7 und einer daran anliegenden flexiblen Membran 8, die zwischen dem äußeren Umfang des Membrantellers 7 und dem Verstärkergehäuse 1 eine Rollmembran als Abdichtung der beiden Kammern 5,6 zueinander und der beiden Kammern 5,6 gegenüber der Atmosphäre bildet.

Ein durch ein Eingangsglied 9 betätigbares Steuerventil 10 ist in einem im Verstärkergehäuse 1 abgedichtet geführten, die bewegliche Wand 4 tragenden Steuergehäuse 11 untergebracht und besteht aus einem, am Steuergehäuse 11 ausgebildeten ersten Dichtsitz 12, einem an einem mit dem Eingangsglied 9 verbundenen Ventilkolben 14 ausgebildeten zweiten Dichtsitz 13 sowie einem mit beiden Dichtsitzen 12,13 zusammenwirkenden Ventilkörper 15, der mittels einer Ventilfeder 16 gegen die Ventilsitze 12,13 gedrückt wird. Wie aus Fig. 1 zu erkennen ist, stützt sich die Ventilfeder 16 an einer im Steuergehäuse 11 angeordneten Haltehülse 17 ab. Die Arbeitskammer 5 ist mit der Unterdruckkammer 6 über einen seitlich im Steuergehäuse 5 verlaufenden Kanal 18 verbindbar. Weiter ist das Eingangsglied 9 mit einem nicht dargestellten Bremspedal verbunden.

Die Bremskraft wird über eine stirnseitig am Steuergehäuse 11 anliegende gummielastische Reaktionsscheibe 19 sowie eine einen Kopfflansch 20 aufweisende Druckstange 21 auf einen Betätigungskolben eines nicht dargestellten Hauptzylinders der Bremsanlage übertragen, der am unterdruckseitigen Ende des Bremskraftverstärkers angebracht ist. Die an dem Eingangsglied 9 eingeleitete Eingangskraft wird auf die Reaktionsscheibe 19 mittels des Ventilkolbens 14 übertragen.

Eine in der Zeichnung schematisch dargestellte Rückstellfeder 22, die sich an der unterdruckseitigen Stirnwand des Verstärkergehäuses 1 abstützt, hält die bewegliche Wand 4 in der gezeigten Ausgangsstellung. Außerdem ist eine Rückholfeder 23 vorgesehen, die zwischen dem Eingangsglied 9 und der Haltehülse 17 angeordnet ist und deren Kraft für eine Vorspannung des Ventilkolbens 14 bzw. seines Ventilsitzes 13 gegenüber dem Ventilkörper 15 sorgt.

Um die Arbeitskammer 5 bei der Betätigung des Steuerventils 10 mit der Atmosphäre verbinden zu können, ist schließlich im Steuergehäuse 11 ein annähernd radial verlaufender Kanal 24 ausgebildet. Die Rückkehrbewegung des Ventilkolbens 14 am Ende eines Bremsvorganges wird dabei durch ein Querglied 25 begrenzt, das in der in der Zeichnung gezeigten Lösestellung des Bremskraftverstärkers an einem das Steuergehäuse 11 im Verstärkergehäuse 1 abgedichtet führenden Gleitdichtring 26 anliegt. Alternativ kann das Querglied 25 auch direkt an dem Verstärkergehäuse 1 anschlagen.

Der Ventilkörper 15 kann ebenso eine mit den beiden Dichtsitzen 12,13 zusammenwirkende ringförmige Dichtfläche aufweisen, die mittels einer metallischen Versteifungsscheibe versteift ist und mit mehreren axialen Durchlässen versehen ist. Dabei ist im Steuergehäuse 11 ein pneumatischer Raum begrenzt. In dem Ventilkörper 15 kann beispielsweise ein im Querschnitt U-förmig ausgebildetes, ringförmiges Versteifungselement angeordnet sein, an dem die Ventilfeder 16 abgestützt ist und das mehrere, den Durchlässen des Ventilkörpers 15 gegenüberliegend ausgebildete Öffnungen aufweist. Die durch die Durchlässe und die Öffnungen gebildeten Strömungskanäle können dann den pneumatischen Raum mit einem durch die Dichtsitze 12,13 begrenzten Ringraum verbinden, in dem der oben erwähnte pneumatische Kanal 24 mündet, so dass der pneumatische Raum, der auf einer der Dichtfläche abgewandten Seite des Ventilkörpers 15 ausgebildet ist, ständig mit der Arbeitskammer 5 in Verbindung steht und am Ventilkörper 15 ein Druckausgleich stattfindet.

Die Membran 8 des bekannten Bremskraftverstärkers weist einen radial innenliegenden Dichtwulst 27 auf, welcher unter Zuhilfenahme einer radial nach innen gerichteten Vorspannung in eine umlaufende Nut 28 des Steuergehäuses 11 eingeknöpft ist. An die Nut 28 schließt sich eine Abstützfläche 29 für einen radial innenliegenden Bereich des Membrantellers 7 an, welcher als ringförmige Wölbung 30 ausgebildet ist, wobei die Kontur der Abstützfläche 29 der gewölbten Form der Wölbung 30 entspricht. Ebenso ist an dem radial innenliegenden Dichtwulst 27 eine gewölbte Anlagefläche 31 zur Anlage an der Wölbung 30 des Membrantellers 7 vorgesehen. Ferner weist die umlaufende Nut 28 eine kreissegmentförmige Krümmung 32 auf, welche mit der gewölbten Anlagefläche 31 des Dichtwulstes 27 zusammenwirkt.

Wie Fig. 1 zu entnehmen ist, weist die Membran 8 einen radial außenliegenden Dichtwulst 33 auf, welcher zwischen zwei im Wesentlichen radial ausgebildeten Flanschen 34,35 der Gehäusehalbschalen 2,3 eingespannt ist. An dem radialen Flansch 35 der zweiten Gehäusehalbschale 3 ist ein axial ausgebildeter Flansch 36 angeformt, welcher nach Montage der beiden Gehäusehalbschalen 2,3 den radialen Flansch 34 der ersten Gehäusehalbschale 2 überragt. Die kraftschlüssige Verbindung der Gehäusehalbschalen 2,3 erfolgt beispielsweise durch Lancieren des axialen Flansches 36. Wie ersichtlich ist, wird der radial außenliegende Dichtwulst 33 beim Fügen der Gehäusehalbschalen 2,3 derart verformt, dass dabei überschüssiges Volumen des Dichtwulstes 33 aus einem Einbauraum 37 zwischen den Flanschen 34,35,36 in einen Innenraum des Bremskraftverstärkers gedrängt wird. Wie Untersuchungen gezeigt haben, führt das Herausdrängen des überschüssigen Volumens des Dichtwustes 33 zu einer verschlechterten Montage der Membran 8, wobei die Abdichtung der beiden Kammern 5,6 durch die Membran 8 nicht gewährleistet ist. Diese Undichtigkeit führt zwangsläufig zu einem Ausfall des Bremskraftverstärkers.

Die Funktionsweise und der grundsätzliche Aufbau der nachfolgend beschriebenen Ausführungsbeispiele der Erfindung unterscheiden sich nicht von der Funktionsweise und von dem grundsätzlichen Aufbau des gemäß Fig. 1 beschriebenen bekannten Bremskraftverstärkers, so dass lediglich die für die Erfindung wesentlichen Teile im Folgenden dargestellt und beschrieben werden. Gleiche Bauteile sind dabei mit gleichen Bezugszeichen versehen und werden nachstehend nicht mehr beschrieben.

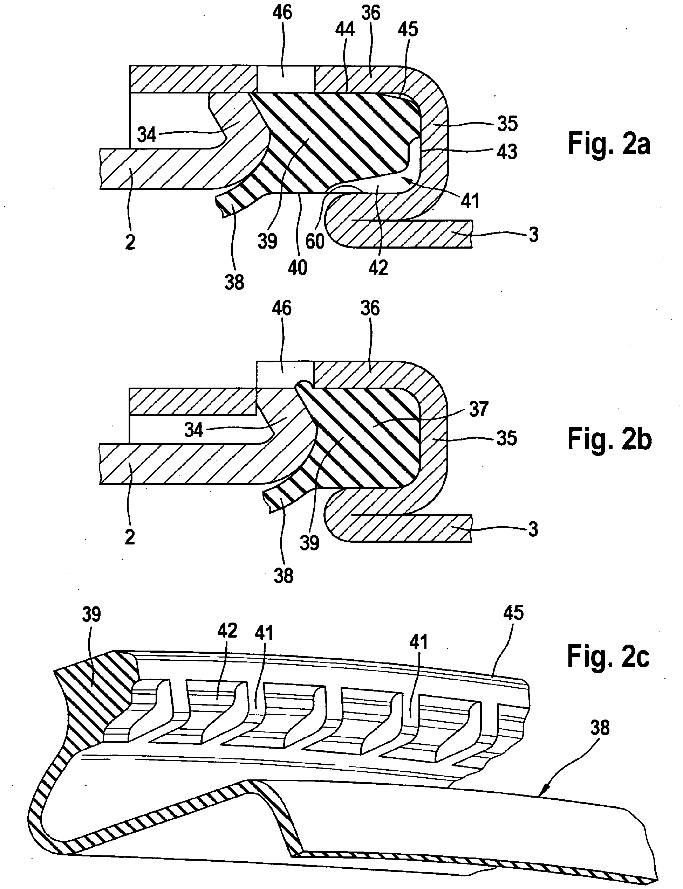

In Fig. 2 ist ein Ausschnitt eines ersten Ausführungsbeispiels eines erfindungsgemäßen Bremskraftverstärkers dargestellt, wobei Fig. 2a den Ausschnitt vor dem Lancieren der Gehäusehalbschalen 2,3, Fig. 2b den Ausschnitt nach dem Lancieren der Gehäusehalbschalen 2,3 und Fig. 2c einen Ausschnitt einer Membran 38 mit einem radial außenliegenden Dichtwulst 39 des ersten Ausführungsbeispiels in räumlicher Ansicht zeigt.

Wie insbesondere aus Fig. 2a und 2c ersichtlich ist, weist der Dichtwulst 39 an einer radialen Innenseite 40 eine umlaufende Rippenstruktur mit Rippen 41 und Rippenzwischenräumen 42 auf. Die Rippen 41 sind in gleichmäßigem Abstand zueinander angeordnet und gewährleisten, dass das Dichtwulstvolumen beim Zusammenfügen der beiden Gehäusehalbschalen 2,3 in dem in Fig. 2b gezeigten, zwischen den Flanschen 34,35,36 vorgesehenen Einbauraum 37 bleibt und kein überschüssiges Volumen in den Innenraum gedrängt wird. Wie aus Fig. 2a und 2c hervorgeht, erstrecken sich die Rippenzwischenräume 42 lediglich teilweise über die radiale Innenseite 40 sowie lediglich teilweise über eine, an dem radialen Flansch 35 anliegende axiale Seite 43 des Dichtwulstes 39. Der Vorteil der beschriebenen Rippenstruktur ist eine Stabilisierung des Dichtwulstes, da die Rippen 41 den korrekten Sitz im Einbauraum 37 gewährleisten. Gleichzeitig ist eine Werkstoffeinsparung des Dichtwulstes 39 möglich, so dass kein überschüssiges Dichtwulstvolumen entstehen kann.

Im Unterschied zu dem bekannten Bremskraftverstärker gemäß Fig. 1 weist die zweite Gehäusehalbschale 3 eine axial ausgerichtete Führungsfläche 60 auf, welche der gezielten Führung des Dichtwulstes 39 bei der Montage dient. Weitere Umgestaltungen der zweiten Gehäusehalbschale 3 sind nicht erforderlich.

Auf einer radialen Außenseite 44 des Dichtwulstes 39 weist dieser an einer dem radialen Flansch 35 zugewandten Seite eine Einführschräge 45 auf, welche die Montage des Dichtwulstes 38 erleichtert. Eine weitere Montageerleichterung wird durch eine leicht konische Ausgestaltung der radialen Innenseite 40 erzielt.

Ferner ist von Vorteil, dass beim Zusammenfügen der Gehäusehalbschalen 2,3 die Luft in den Rippenzwischenräumen 42 gezielt aus dem Einbauraum 37 herausgeführt wird, wodurch kein Luftpolster entstehen kann und in dem Einbauraum 37 für das Dichtwulstvolumen ausreichend Platz zur Verfügung steht.

Bei einer Steglancierung der Gehäusehalbschalen 2,3 weist die zweite Gehäusehalbschale 3 im Bereich des axialen Flansches 36 radial ausgerichtete Spalte 46 auf, welche derart positioniert sind, dass sich nach Zusammenfügen der Gehäusehalbschalen 2,3 die Spalte 46 geringfügig mit dem Einbauraum 37 überdecken, so dass sich der Dichtwulst 39 minimal nach radial außen verformen kann und zusätzlich ein Herausdrängen von überschüssigem Dichtwulstvolumen in den Innenraum verhindert wird.

Die nachfolgenden zwei Ausführungsbeispiele unterscheiden sich zum oben beschriebenen lediglich in der Ausgestaltung des Dichtwulstes, so dass die Beschreibung des zweiten und dritten Ausführungsbeispiels darauf beschränkt wird. Dabei sind die zum ersten Ausführungsbeispiel genannten Vorteile ebenso für die Nachfolgenden zutreffend.

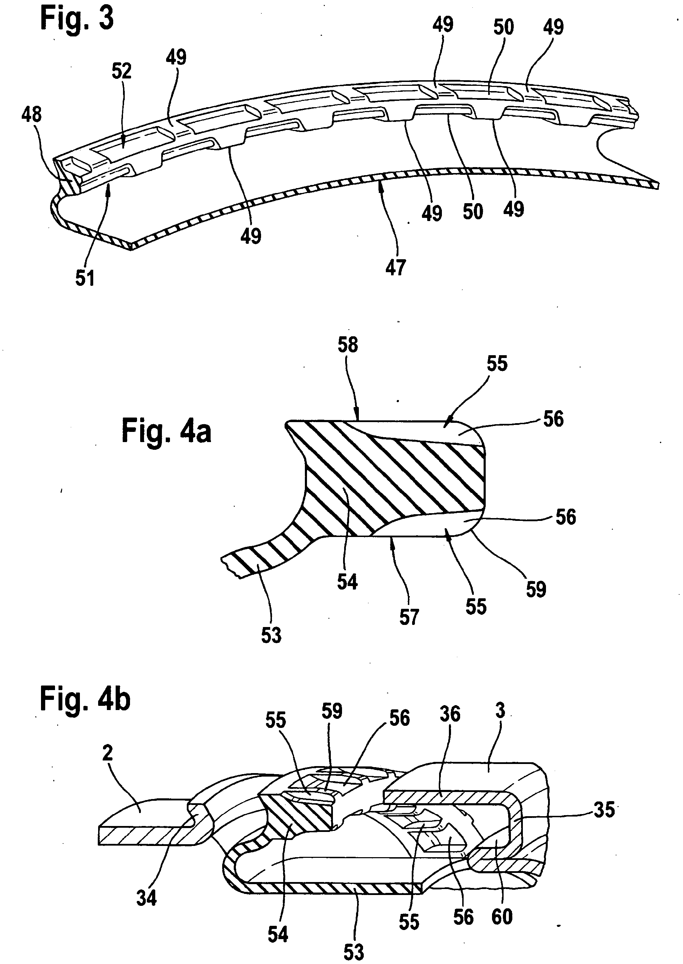

Fig. 3 zeigt einen Ausschnitt einer Membran 47 eines zweiten Ausführungsbeispiels in räumlicher Ansicht. Dabei ist ersichtlich, dass die Membran 47 einen radial außenliegenden Dichtwulst 48 mit Rippen 49 und Rippenzwischenräumen 50 aufweisen kann, wobei die Rippen 49 und die Rippenzwischenräume 50 jeweils an einer radialen Innenseite 51 und einer radialen Außenseite 52 zueinander versetzt angeordnet vorgesehen sind. Auch bei diesem Ausführungsbeispiel können die Innenseite 51 sowie die Außenseite 52 geringfügig konisch ausgestaltet sein, um die Montage der Membran 47 zu erleichtern. Ferner können zu diesem Zweck die Rippen 49 Einführschrägen aufweisen.

Aus Fig. 4a und 4b ist ein drittes Ausführungsbeispiel zu entnehmen, dessen Membran 53 einen radial außenliegenden Dichtwulst 54 mit einer umlaufenden Rippenstruktur, d.h. Rippen 55 und Rippenzwischenräume 56, aufweist. Wie insbesondere aus Fig. 4a deutlich ersichtlich ist, sind die Rippen 55 und die Rippenzwischenräume 56 jeweils an einer radialen Innenseite 57 und einer radialen Außenseite 58 zueinander gegenüberliegend angeordnet. Ferner können, wie bereits zu den ersten beiden Ausführungsbeispielen beschrieben, die Innenseite 57 und die Außenseite 58 geringfügig konisch ausgestaltet sein oder Einführschrägen 59 zur erleichterten Montage aufweisen.

Insbesondere die dritte Ausführungsform des Bremskraftverstärkers mit den übereinander liegenden Rippen 55 hat sich als besonders vorteilhaft in Bezug auf die Stabilisierung des Dichtwulstes 54 herausgestellt, wobei die Rippenstruktur nach dem Zusammenfügen der Gehäusehalbschalen 2,3 einen korrekten Sitz des Dichtwulstes 54 im Einbauraum 37 gewährleistet, da die gegenüberliegenden Rippen 55 den Dichtwulst 54 trotz Schwächung des Werkstoffes durch die Rippenzwischenräume 56 gut stabilisieren und eine sehr gleichmäßige Verformung des Dichtwulstes ermöglichen.

### Bezugszeichenliste

- 1: Verstärkergehäuse
- 2: erste Gehäusehalbschale
- 3: zweite Gehäusehalbschale
- 4: bewegliche Wand
- 5: Arbeitskammer
- 6: Unterdruckkammer
- 7: Membranteller
- 8: Membran
- 9: Eingangsglied
- 10: Steuerventil
- 11: Steuergehäuse
- 12: erster Dichtsitz
- 13: zweiter Dichtsitz
- 14: Ventilkolben
- 15: Ventilkörper
- 16: Ventilfeder
- 17: Haltehülse
- 18: Kanal
- 19: Reaktionsscheibe
- 20: Kopfflansch
- 21: Druckstange
- 22: Rückstellfeder
- 23: Rückholfeder
- 24: Kanal
- 25: Querglied
- 26: Gleitringdichtung
- 27: Dichtwulst
- 28: Nut
- 29: Abstützfläche
- 30: Wölbung
- 31: Anlagefläche
- 32: Krümmung
- 33: Dichtwulst
- 34: Flansch
- 35: Flansch
- 36: Flansch
- 37: Einbauraum
- 38: Membran
- 39: Dichtwust
- 40: Innenseite
- 41: Rippe
- 42: Rippenzwischenraum
- 43: Seite
- 44: Außenseite
- 45: Einführschräge
- 46: Spalt
- 47: Membran
- 48: Dichtwulst
- 49: Rippe
- 50: Rippenzwischenraum
- 51: Innenseite
- 52: Außenseite
- 53: Membran
- 54: Dichtwulst
- 55: Rippe
- 56: Rippenzwischenraum
- 57: Innenseite
- 58: Außenseite
- 59: Einführschräge
- 60: Führungsfläche

## Patentansprüche

1. Pneumatischer Bremskraftverstärker mit einem Verstärkergehäuse (1), welches eine erste und eine zweite Gehäusehalbschale (2,3) umfasst und welches durch eine, mit einem pneumatischen Differenzdruck beaufschlagbare, axial bewegliche Wand (4) in eine Arbeitskammer (5) und eine Unterdruckkammer (6) unterteilt ist, wobei die bewegliche Wand (4) durch einen Membranteller (7) und eine daran anliegende Membran (38;47;53) gebildet ist, die einen radial innenliegenden Dichtwulst (27) sowie einen radial außenliegenden Dichtwulst (39;48;54) zur Abdichtung der beiden Kammern (5,6) aufweist, wobei der radial außenliegende Dichtwulst (39;48;54) zwischen radialen Flanschen (34,35) und einem axialen Flansch (36) der Gehäusehalbschalen (2,3) einspannbar ist, **dadurch gekennzeichnet, dass** der radial außenliegende Dichtwulst (39;48;54) an wenigstens einer radialen Seite (40,44;57,58) eine umlaufende, gleichmäßige Rippenstruktur mit Rippen (41;49;55) und Rippenzwischenräumen (42;50;56) aufweist, wobei die zweite Gehäusehalbschale (3) eine axial ausgerichtete Führungsfläche (60) zur gezielten Führung des Dichtwulstes (39;48;54) bei der Montage aufweist und wobei beim Zusammenfügen der Gehäusehalbschalen (2,3) die Luft in den Rippenzwischenräumen (42;50;56) gezielt aus einem Einbauraum (37) des Dichtwulstes (39;48;54) herausgeführt wird, wodurch kein Luftpolster entstehen kann.

2. Pneumatischer Bremskraftverstärker nach Anspruch 1, **dadurch gekennzeichnet, dass** die Rippenstruktur mit Rippen (41) und Rippenzwischenräumen (42) auf einer radialen Innenseite (40) des Dichtwulstes (39) vorgesehen ist.

3. Pneumatischer Bremskraftverstärker nach Anspruch 2, **dadurch gekennzeichnet, dass** sich die Rippenzwischenräume (42) lediglich teilweise über die radiale Innenseite (40) sowie lediglich teilweise über eine axiale Seite (43) des Dichtwulstes (39) erstrecken, welche an einem radialen Flansch (35) der zweiten Gehäusehalbschale (3) anliegt.

4. Pneumatischer Bremskraftverstärker nach Anspruch 2, **dadurch gekennzeichnet, dass** die Gehäusehalbschalen (2,3) mittels einer Steglancierung miteinander kraftschlüssig verbunden, wobei an dem radialen Flansch (35) der zweiten Gehäusehalbschale (3) ein axialer ausgebildeter Flansch (36) angeformt ist, welcher radial ausgerichtete Spalte (46) aufweist, die sich nach der Verbindung der Gehäusehalbschalen (2,3) mit dem Einbauraum (37) des Dichtwulstes (39) geringfügig überdecken.

5. Pneumatischer Bremskraftverstärker nach Anspruch 4, **dadurch gekennzeichnet, dass** eine radiale Außenseite (44) des Dichtwulstes (39) eine Einführschräge (45) aufweist und die radiale Innenseite (40) konisch vorgesehen ist.

6. Pneumatischer Bremskraftverstärker nach Anspruch 1, **dadurch gekennzeichnet, dass** die Rippenstruktur mit Rippen (49;55) und Rippenzwischenräumen (50;56) auf einer radialen Innenseite (51;57) des Dichtwulstes (48;54) sowie auf einer radialen Außenseite (52;58) vorgesehen ist.

7. Pneumatischer Bremskraftverstärker nach Anspruch 6, **dadurch gekennzeichnet, dass** die Rippen (49) auf der radialen Innenseite (51) und der radialen Außenseite (52) zueinander versetzt angeordnet sind.

8. Pneumatischer Bremskraftverstärker nach Anspruch 6, **dadurch gekennzeichnet, dass** die Rippen (55) auf der radialen Innenseite (57) und der radialen Außenseite (58) zueinander gegenüberliegend angeordnet sind.

9. Pneumatischer Bremskraftverstärker nach Anspruch 7 oder 8, **dadurch gekennzeichnet, dass** die Rippen (41;49;55) Einführschrägen (45;59) aufweisen.

10. Pneumatischer Bremskraftverstärker nach Anspruch 7 oder 8, **dadurch gekennzeichnet, dass** die radiale Innenseite (51;57) sowie eine radiale Außenseite (52;58) des Dichtwulstes (48;54) konisch ausgestaltet vorgesehen sind.

11. Pneumatischer Bremskraftverstärker nach einem der vorangegangenen Ansprüche, **dadurch gekennzeichnet, dass** die zweite Gehäusehalbschale (3) eine axial ausgerichtete Führungsfläche (60) zur Führung des Dichtwulstes (39;48;54) aufweist.

12. Membran (38;47;53) für einen pneumatischen Bremskraftverstärker nach einem der vorangegangenen Ansprüche, wobei die Membran (38;47;53) einen Dichtwulst (39;48;54) nach einem der vorangegangenen Ansprüche aufweist, derart, dass beim Zusammenfügen der Gehäusehalbschalen (2,3) die Luft in den Rippenzwischenräumen (42;50;56) gezielt aus einem Einbauraum (37) des Dichtwulstes (39;48;54) herausgeführt wird, wodurch kein Luftpolster entstehen kann.

## Claims

1. Pneumatic brake booster with a booster housing (1) which comprises a first and a second housing half-shell (2, 3) and which is subdivided into a corking chamber (5) and a vacuum chamber (6) by an axially movable wall (4) capable of being acted upon by a pneumatic differential pressure, the movable wall (4) being formed by a diaphragm plate (7) and by a diaphragm (38; 47; 53) which bears against the latter and which has a radially inner sealing bead (27) and a radially outer sealing bead (39; 48; 54) for sealing off the two chambers (5, 6), the radially outer sealing bead (39; 48; 54) being capable of being tension-mounted between radial flanges (34, 35) and an axial flange (36) of the housing half-shells (2, 3), **characterized in that** the radially outer sealing bead (39; 48; 54) has on at least one radial side (40, 44; 57, 58) a peripheral uniform rib structure with ribs (41; 49; 55) and with rib interspaces (42; 50; 56), the second housing half-shell (3) having an axially oriented guide face (60) for the directed guidance of the sealing bead (39; 48; 54) during fitting, and, when the housing half-shells (2, 3) are being joined together, the air in the rib interspaces (42; 50; 56) being led out of an installation space (37) of the sealing bead (39; 48; 54) in a directed manner, with the result that no air cushion can arise.

2. Pneumatic brake booster according to Claim 1, **characterized in that** the rib structure with ribs (41) and with rib interspaces (42) is provided on a radial inside (40) of the sealing bead (39).

3. Pneumatic brake booster according to Claim 2, **characterized in that** the rib interspaces (42) extend only partially over the radial inside (40) of the sealing bead (39) and only partially over an axial side (43) of the latter which bears against a radial flange (35) of the second housing half-shell (3).

4. Pneumatic brake booster according to Claim 2, **characterized in that** the housing half-shells (2, 3) are connected non-positively to one another by means of web interlacing, the radial flange (35) of the second housing half-shell (3) having integrally formed on it an axial flange (36) which has radially oriented gaps (46) which overlap one another slightly after the connection of the housing half-shells (2, 3) to the installation space (37) of the sealing bead (39).

5. Pneumatic brake booster according to Claim 4, **characterized in that** a radial outside (44) of the sealing bead (39) has an introduction slope (45) and the radial inside (40) is provided conically.

6. Pneumatic brake booster according to Claim 1, **characterized in that** the rib structure with ribs (49; 55) and with rib interspaces (50; 56) is provided on a radial inside (51; 57) of the sealing bead (48; 54) and on a radial outside (52; 58).

7. Pneumatic brake booster according to Claim 6, **characterized in that** the ribs (49) on the radial inside (51) and on the radial outside (52) are arranged so as to be offset to one another.

8. Pneumatic brake booster according to Claim 6, **characterized in that** the ribs (55) on the radial inside (57) and on the radial outside (58) are arranged opposite to one another.

9. Pneumatic brake booster according to Claim 7 or 8, **characterized in that** the ribs (41; 49; 55) have introduction slopes (45; 59).

10. Pneumatic brake booster according to Claim 7 or 8, **characterized in that** the radial inside (51; 57) and a radial outside (52; 58) of the sealing bead (48; 54) are provided so as to be configured conically.

11. Pneumatic brake booster according to one of the preceding claims, **characterized in that** the second housing half-shell (3) has an axially oriented guide face (60) for guiding the sealing bead (39; 48; 54).

12. Diaphragm (38; 47; 53) for a pneumatic brake booster according to one of the preceding claims, the diaphragm (38; 47; 53) having a sealing bead (39; 48; 54) according to one of the preceding claims, in such a way that, when the housing half-shells (2, 3) are being joined together, the air in the rib interspaces (42; 50; 56) is led out of an installation space (37) of the sealing bead (39; 48; 54) in a directed manner, with the result that no air cushion can arise.

## Revendications

1. Servofrein pneumatique comprenant un boîtier de servofrein (1) qui comprend une première et une deuxième demi-coque de boîtier (2, 3), et qui est divisé par une paroi mobile axialement (4), pouvant être sollicitée par une pression différentielle pneumatique, en une chambre de travail (5) et une chambre de dépression (6), la paroi mobile (4) étant formée par un plateau de membrane (7) et une membrane (38 ; 47 ; 53) s'appliquant contre lui, qui présente un bourrelet d'étanchéité (27) situé radialement à l'intérieur ainsi qu'un bourrelet d'étanchéité (39 ; 48 ; 54) situé radialement à l'extérieur pour l'étanchéité des deux chambres (5, 6), le bourrelet d'étanchéité (39 ; 48 ; 54) situé radialement à l'extérieur pouvant être serré entre des brides radiales (34, 35) et une bride axiale (36) des demi-coques de boîtier (2, 3), **caractérisé en ce que** le bourrelet d'étanchéité (39 ; 48 ; 54) situé radialement à l'extérieur présente, sur au moins un côté radial (40, 44 ; 57, 58), une structure nervurée uniforme périphérique avec des nervures (41 ; 49 ; 55) et des espaces (42 ; 50 ; 56) entres les nervures, la deuxième demi-coque de boîtier (3) présentant une surface de guidage (60) orientée axialement pour le guidage ciblé du bourrelet d'étanchéité (39 ; 48 ; 54) lors du montage, et lors de l'assemblage des demi-coques de boîtier (2, 3) l'une à l'autre, l'air dans les espaces (42 ; 50 ; 56) entres les nervures étant évacué de manière ciblée hors d'un espace d'installation (37) du bourrelet d'étanchéité (39 ; 48 ; 54), de sorte qu'il ne puisse pas se former de coussin d'air.

2. Servofrein pneumatique selon la revendication 1, **caractérisé en ce que** la structure nervurée est pourvue de nervures (41) et d'espaces (42) entre les nervures sur un côté intérieur radial (40) du bourrelet d'étanchéité (39).

3. Servofrein pneumatique selon la revendication 2, **caractérisé en ce que** les espaces (42) entre les nervures s'étendent seulement en partie sur le côté intérieur radial (40) et seulement en partie sur un côté axial (43) du bourrelet d'étanchéité (39) qui s'applique contre une bride radiale (35) de la deuxième demi-coque de boîtier (3).

4. Servofrein pneumatique selon la revendication 2, **caractérisé en ce que** les demi-coques de boîtier (2, 3) sont connectées par engagement par force l'une à l'autre au moyen d'un crevage de languettes, une bride (36) axiale étant formée sur la bride radiale (35) de la deuxième demi-coque de boîtier (3), laquelle bride axiale présente des fentes (46) orientées radialement, qui se recouvrent légèrement après l'assemblage des demi-coques de boîtier (2, 3) avec l'espace d'installation (37) du bourrelet d'étanchéité (39).

5. Servofrein pneumatique selon la revendication 4, **caractérisé en ce qu'**un côté extérieur radial (44) du bourrelet d'étanchéité (39) présente un biseau d'insertion (45) et le côté intérieur radial (40) est prévu sous forme conique.

6. Servofrein pneumatique selon la revendication 1, **caractérisé en ce que** la structure nervurée est pourvue de nervures (49 ; 55) et d'espaces (50 ; 56) entre les nervures sur un côté intérieur radial (51 ; 57) du bourrelet d'étanchéité (48 ; 54) et sur un côté extérieur radial (52 ; 58).

7. Servofrein pneumatique selon la revendication 6, **caractérisé en ce que** les nervures (49) sur le côté intérieur radial (51) et sur le côté extérieur radial (52) sont disposées de manière décalées les unes par rapport aux autres.

8. Servofrein pneumatique selon la revendication 6, **caractérisé en ce que** les nervures (55) sur le côté intérieur radial (57) et sur le côté extérieur radial (58) sont disposées en regard les unes des autres.

9. Servofrein pneumatique selon la revendication 7 ou 8, **caractérisé en ce que** les nervures (41 ; 49 ; 55) présentent des biseaux d'insertion (45 ; 59).

10. Servofrein pneumatique selon la revendication 7 ou 8, **caractérisé en ce que** le côté intérieur radial (51 ; 57) ainsi qu'un côté extérieur radial (52 ; 58) du bourrelet d'étanchéité (48 ; 54) sont prévus sous forme conique.

11. Servofrein pneumatique selon l'une quelconque des revendications précédentes, **caractérisé en ce que** la deuxième demi-coque de boîtier (3) présente une surface de guidage (60) orientée axialement pour le guidage du bourrelet d'étanchéité (39 ; 48 ; 54).

12. Membrane (38 ; 47 ; 53) pour un servofrein pneumatique selon l'une quelconque des revendications précédentes, dans laquelle la membrane (38 ; 47 ; 53) présente un bourrelet d'étanchéité (39 ; 48 ; 54) selon l'une quelconque des revendications précédentes, de telle sorte que lors de l'assemblage des demi-coques de boîtier (2, 3), l'air dans les espaces (42 ; 50 ; 56) entres les nervures soit évacué de manière ciblée hors d'un espace d'installation (37) du bourrelet d'étanchéité (39 ; 48 ; 54), de sorte qu'il ne puisse pas se former de coussin d'air.
